# EUROPEAN PATENT SPECIFICATION

(11) **EP 2 547 234 B1**
(45) Date of publication and mention of the grant of the patent: **10.07.2019**
(21) Application number: 11718646.0
(22) Date of filing: 21.03.2011
(51) Int. Cl.: A47B 47/04, F16B 12/24

(54) **MODULARLY ASSEMBLABLE FURNITURE SYSTEM**
MODULAR ZUSAMMENBAUBARES MÖBELSYSTEM
SYSTÈME MOBILIER APTE À UN ASSEMBLAGE MODULAIRE

(30) Priority: 19.03.2010 DK 201070113
(43) Date of publication of application: 23.01.2013
(73) Proprietor: RDS Design APS, 3450 Allerød (DK)
(72) Inventor: LASSEN, Peter Joakim, DK-3450 Allerød (DK)
(74) Representative: Chas. Hude A/S
(86) International application number: PCT/DK2011/000018
(87) International publication number: WO 2011/113434

(56) References cited:
- EP-A1- 2 036 455
- DE-U1- 7 808 480
- DE-U1-202008 000 485
- FR-A2- 2 115 051
- FR-A5- 2 241 954

## Description

The invention relates to a modularly assemblable furniture system for assembling box-shaped furniture systems such as a set of shelves.

It is known to assemble furniture such as set of shelves by use of angle brackets. The angle brackets abut the two objects, which are to be assembled, whereupon the bracket is fastened to the objects by fixtures, such as screws, and the objects are thereby held together in the desired angle. However, the use of e.g. screws and nails requires the use of tools. The tool is required to focus the force to be transmitted to the fixtures.

DE 8810628U1 discloses a furniture bracket fixing two boards in a desired angle. It is disclosed how the bracket is to be screwed into the boards. The bracket is shaped so that one end is fixed with a screw in the rear wood of a board, and the other end is fixed with a screw by means of a bushing in the lateral face of a second board. This assembly method requires tools.

FR 2115051 A2 relates to a modularly assemblable furniture system. The modularly assemblable furniture system comprises furniture panels having recesses, so that the furniture panels may be connected together by use of angle brackets. This modularly assemblable furniture system requires tools.

EP 2036455 A1 relates to a modularly assemblable furniture system comprising an angle bracket for assembling two furniture panels. The furniture panels comprise recesses for receiving projections of the angle bracket. The projections comprise a bolt and a screw and the modularly assemblable furniture system thus requires tools.

FR 2241954 A5 relates to a modularly assemblable furniture system comprising an angle bracket for assembling two or more furniture panels. The furniture panels comprise recesses for receiving projections of the angle bracket. The angle bracket is designed for carrying at least one of the furniture panels and must therefore comprise a solid material.

DE 7808480 U1 discloses another state of the art modularly assemblable furniture system.

The object of the invention is to provide a simple furniture system, which can be assembled and enlarged as required without the use of tools.

It is a second aspect of the present invention to provide a single-faced furniture system, which is stable and still aesthetic.

According to the invention, this is achieved by providing a modularly assemblable furniture system for assembling box-shaped furniture systems such as a set of shelves, comprising:
- a number of first boards with a thickness and a first lateral face and a second lateral face and a first edge face and a second edge face,
- a number of second boards with a thickness and with a first lateral face and a second lateral face and a first edge face and a second edge face, as well as
- a number of angle brackets for a rectangular assembly of a first board with a second board,
where the angle bracket comprises:
- a board-shaped basis part with a first basis part face and a second basis part face,
- a first projection comprising two dowels projecting from the first basis part face, and
- a second projection comprising two dowels projecting from the second basis part face, said projections being positioned at a distance from each other,
- said second boards being provided with, in relation to the thickness, centrally positioned edge recesses in a couple of opposing edge faces, said edge recesses being dimensioned for reception of the second projection, and
- said first boards having in the first lateral face first and second face recesses, which are dimensioned for reception of the first projection of the angle bracket, said face recesses being positioned at a distance from the first and the second edge faces respectively, so that when the second projections of the angle bracket are engaged with the edge recesses of a second board, said edge face of the first board is flush with the lateral face of the second board so that an end wall of said furniture system appears essentially as a plane surface. The invention is characterised in that the face recesses on the first and second lateral face, respectively, of the first boards are positioned two by two opposite each other perpendicular on the lateral face when seen in a sectional view and in that the modularly assemblable furniture system is for assembling box-shaped furniture systems without use of other fixtures, such as or screws to hold the system together.

By this, it is achieved that the furniture system can be enlarged indefinitely by increasing the number of boards and brackets. Regardless of how much the furniture system is enlarged, it will still be a single-faced system. For instance by assembly of a set of selves, this system can be assembled in the height by no use of parts with a different shape than those already used. The system is only held together by the interaction of the brackets with the boards, and no other fixtures, such as nails or screws, are thus used to hold the system together. This has the result that the system is very easy to assemble and that it can be assembled without the use of tools. If it is attempted to tilt the second boards away from the essentially perpendicular position in relation to the first boards, force will be transmitted to the angle bracket basis part. The first projection of the bracket prevents that the bracket is offset parallel with the lateral faces of the first board. This means that the basis part provides torque against tilting a second board. The shape of the furniture system ensures that the individual boards and brackets are not essentially affected by torque. The first space in the furniture system is bounded by four board faces of four boards, but as the furniture system is a single-faced system, an enlargement of the furniture system with an additional space will be formed by only three additional boards. Thus, two neighbouring spaces share one mutual board - either first or second board. The mutual board has the one board face in the first space and the other board face in the second space. A space bounded by four board faces can thus be regarded as one module.

According to the invention, the first board face recesses on the first and second lateral face, respectively, may be positioned two by two opposite each other perpendicular on the lateral faces when seen in a sectional view.

Thereby, a first board with an angle bracket can be fixed to both the first and the second edge face of a second board. In case a first board constitutes a bottom board of a furniture system, a board identical with said bottom board can thus also be used as a top board, which is supported by a second board.

According to the invention, the face recesses of the first boards may be positioned at the same distance from each their closest edge face.

Thereby, the first boards can be turned over without thus requiring use of additional brackets.

According to the invention, the first and/or second boards may be rectangular.

According to the invention, the first board and the second board may be identical.

According to the invention, the first boards may be arcuate.

According to the invention, the face recesses in the first boards may be through-going holes from the first lateral face to the second lateral face.

By this it is achieved that the boards can be turned upside down and thus, the risk of incorrect assembly is minimised. Further, it is achieved that production of the boards is facilitated.

According to the invention, the face recesses and/or the edge recesses are blind holes.

Further, the invention may comprise a T-bracket for connecting three boards, wherein the T-bracket comprises:
- a board-shaped basis part with a first basis part face and a second basis part face,
- a first projection projecting from the first face, said first projection dimensioned for reception in a face recess of a first board,
- a second projection projecting from the second face, said second projection dimensioned for reception in an edge recess of a second board, and
- a third projection projecting from the first face, said third projection dimensioned for reception in a face recess of a flushing abutting additional first board, and where the first and the third projection are positioned at the same distance from the second projection corresponding to the distance of the angle bracket between the first projection and the second projection to which half a board thickness of the second board is added.

By using also a T-bracket, it is achieved that the furniture system, e.g. a set of shelves, may be enlarged in a direction perpendicular to enlargement direction in relation to the furniture system, which only comprises one angle bracket. Likewise, it is achieved that the furniture system is still a singled-faced system. By enlargement with T-brackets, it is achieved that the two first boards abut each other exactly above a second board, or as regards the bottom first boards exactly below a second board. The T-brackets has the effect that the first boards arranged above second boards are supported by the top edge face of the second boards. Vertical loads on a vertical board, typically second boards, thus do not cause torque on a supporting vertical board. If vertical boards had been placed in offset vertical planes, said offset would cause torque reaction by a vertical load on a vertical board with a supporting vertical board. Further, it is achieved that this single-faced furniture system has a slight aesthetic expression, which is uniform regardless of the direction of enlargement. By the use of arcuate boards, it is achieved that a circumferential furniture system can be assembled. By use of e.g. arcuate first boards, it is achieved that the furniture system can be snake-shaped.

Further, the invention may comprise
- a third bracket comprising:
   - a board-shaped basis part with a first basis part face and a second basis part face,
   - a first projection projecting from the first face, said first projection dimensioned for reception in a face recess of a first board, and
   - a second projection projecting from the second face, said second projection dimensioned for reception in an edge recess of a second board, said projections positioned at a distance from each other corresponding to the distance between the first projection and the second projection of the T-bracket, and
- a number of third boards with t thickness and a first lateral face and a second lateral face and a first edge face and a second edge face, where the distance of the third board between the first edge face and the second edge face is increased in relation to the distance of a first board between its first edge face and second edge face, where the increase corresponds to the half of the thickness of a second board.

Thereby, it is achieved that by assembly of a furniture system in staircase form, i.e. with steps, the second boards can still have a joint vertical axis with a top rear board placed above. This means that the board functioning as a supporting riser is aligned with the supporting second boards placed below. When a straight vertical pillar from the bottom of the furniture system to the top of the furniture system is achieved, it is possible to achieve a secure and stable support. Likewise, it is achieved that the aesthetic appearance of the furniture system as a single-faced furniture system is maintained in the same style as when assembling a furniture system, which is not in staircase shape.

According to the invention, the first and/or the second projection may be positioned at a distance from the edge of the basis part.

By a distance from projection to the edge of the basis part, it is achieved that in connection with a twist of the bracket in its mounted position, a moment of resistance is created, which counteracts said twist.

According to the invention, each of the projections is composed by two dowels which may be cylindrical. Cylindrical dowels dimensioned for tight reception in face recesses and edge recesses, respectively, enables easy positioning of the brackets. Furthermore, drilling holes for reception of the dowels is a simple operation, and the production is made easy. It is not required that the dowels are cylindrical-shaped. The dowels may e.g. have a diameter of 3-7 mm, preferably 4-6 mm.

In a further embodiment, the invention may comprise
- a number of T-brackets for rectangular assembly two first boards with a second board, where the T-bracket connects said three boards and wherein
- said second boards being provided with, in relation to the thickness, a centrally positioned edge recess in a pair of opposing edge faces, said edge recess being dimensioned for reception of the second projection, and
- the said first boards having in the first lateral face a first and a second face recess, which are dimensioned for reception of the first and the third projections of a T-bracket, said face recesses being positioned at a distance from the first and the second edge face, respectively, so that when the second projection of the T-bracket is engaged with the edge recess of a second board, and the first and third projections of the T-bracket are received in the face recesses, the first lateral faces of the two first boards are flush with each other.

By this it is achieved that a single-faced circumferential furniture system can be assembled. Said furniture system can be enlarged in the height according to desire without the use of further brackets.

The furniture system may comprise a fourth bracket essentially identical with a T-bracket, where the basis part is expanded. Said fourth bracket can be used for mounting of additional boards mounted essentially perpendicular to first boards with each their lateral faces being flush with each other. A fourth bracket may comprise a fourth projection dimensioned for reception of an additional board in the same plane as a first board, whereby the said additional board is connected essentially perpendicular to a first board. The fourth bracket may comprise a through-going hole in a board-shaped basis part. First and/or second boards may e.g. be of steel, plastic or composite material. The brackets may e.g. be made of steel, plastic or a composite material. The second basis part face of the brackets may further comprise a number of support projections for support on the first and the second face of a board, respectively, the edge recesses of which cooperate with a projection on the bracket. Said support brackets prevents that the board breaks. The support projections may be placed such that the distance between them corresponds exactly to the thickness of second boards. The board-shaped basis part of the brackets may have a thickness of 0.5-4.5 mm, preferably 1-3.5 mm or most preferably 1.5-2.5 mm. The distance between dowels constituting a projection may be 20-1,000 mm. The board-shaped basis part may be 25-1,010 mm wide and/or long. The board-shaped basis part may be rectangular.

The invention is described in details below with reference to the drawing, in which
Fig. 1A shows a furniture system according to the invention,
Fig. 1B shows the furniture system of Fig. 1A in exploded view,
Fig. 2A shows a second embodiment of the furniture system according to the invention,
Fig. 2B shows the furniture system of Fig. 1A in exploded view,
Fig. 3 shows the angle bracket of the furniture system shown in Figs. 1 and 2,
Fig. 4 shows the T-bracket of the furniture system shown in Fig. 2,
Fig. 5 shows an embodiment of an assembled furniture system according to the invention,
Fig. 6 shows a first board according to the invention,
Fig. 7 shows an embodiment of a second board according to the invention,
Fig. 8 shows an embodiment of furniture system with a circumferential shape according to the invention, and
Fig. 9 shows an additional embodiment of the furniture system according to the invention, where the furniture system has partly staircase shape.

As the furniture system always consists of several identical components, not all components are numbered on all Figs. as this would make very confusing Figs.

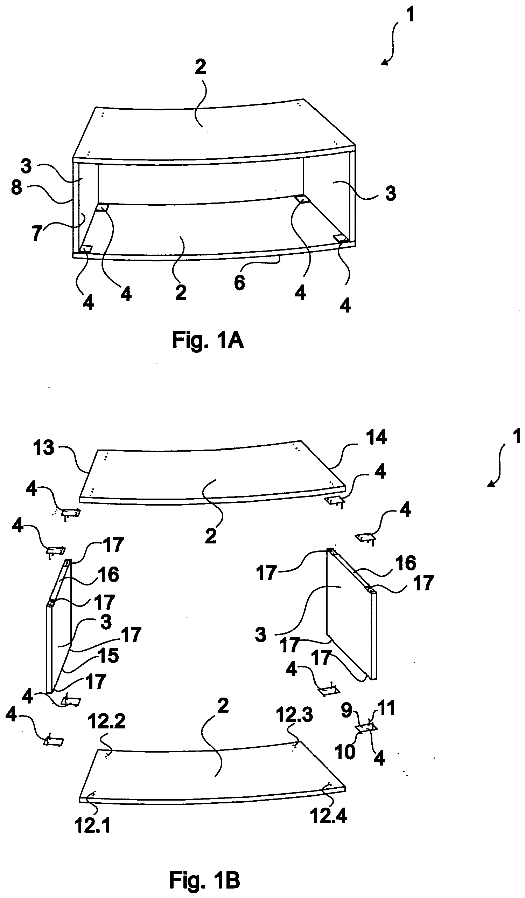

Fig. 1A shows a furniture system 1, where the system comprises two first boards 2 and two second boards 3. The furniture system 1 is box-shaped and is fixed in its shape by eight angle brackets 4 (only four are visible). In this embodiment, the first boards 2 are arcuate, but according to the invention, they can also have other shapes, e.g. triangular, rectangular or polygonal. The two first boards have a first lateral face 5 and an opposite second lateral face 6. The two second boards 3 have a first lateral face 7 and a second lateral face 8.

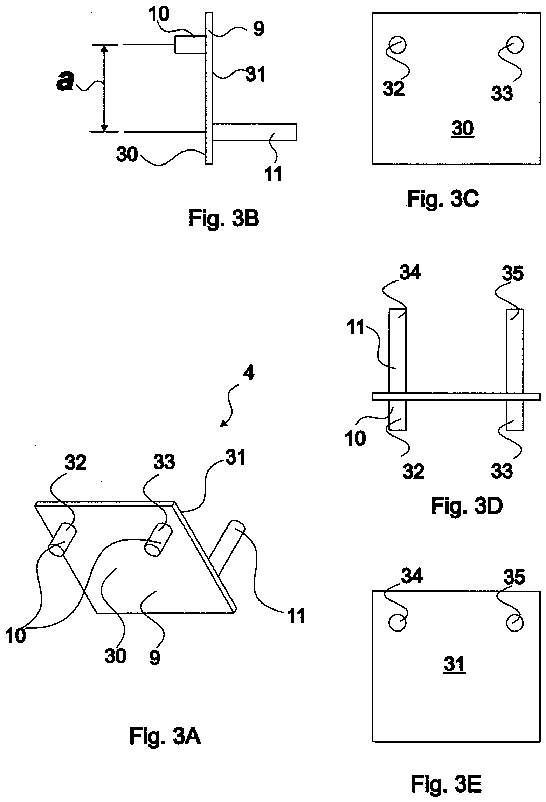

Fig. 1B shows the furniture system 1 of Fig. 1, where the separate parts are not assembled. This way, all eight angle brackets 4 are visible. The angle brackets 4 comprise a board-shaped basis part 9 and a first projection 10 and a second projection 11 (the angle bracket 4 is described in detail in Figs. 3A-E). The two first boards 2 comprise face recesses 12 dimensioned for reception of the first projection 10 of an angle bracket 4. In this embodiment, the two first boards 2 have face recesses 12 in the shape of through-going holes. In other embodiments, said face recesses 12 may be blind holes. First boards 2 comprise a first edge face 13 and a second edge face 14, and second boards 3 comprise a first edge face 15 and a second edge face 16. First and second edge face 15, 16 of the second boards 3 comprise edge recesses 17 dimensioned for reception of the second projection 11 of the angle bracket 4. In this embodiment, the edge recesses 17 of the second boards 3 are blind holes. The edge recesses 17 of second boards 3 are shaped so as to cooperate with the second projection 11 of the angle bracket 4.

By assembly of the furniture system 1 as shown in Figs. 1A and 1B with angle brackets 4, it is achieved that the first lateral faces 7 of the second boards 3 are flush with the edge faces 13, 14 of the first boards 2. This means that Fig. 1A shows that the first projection 10 of the angle brackets 4 is received in the face recesses 12 of the first boards 2 and that the second projection of the angle brackets 4 is received in the edge faces 17 of the second boards 3. At the two second boards 3, the assembly of the furniture system 1 is identical. If a taller shape of the furniture system 1 is desired, e.g. a set of shelves, two additional second boards 3 and one further first board 2 are to be used for each extra layer/module, which is to be built on. By assembly of the furniture system 1 in the height, it is not necessary with other types of boards or brackets.

In the embodiment shown in Fig. 1A, the two first boards 2 only require face recesses in one lateral face. If there is only a face recess in one lateral face, it is, however, not directly possible to build on to the system by means of the angle bracket.

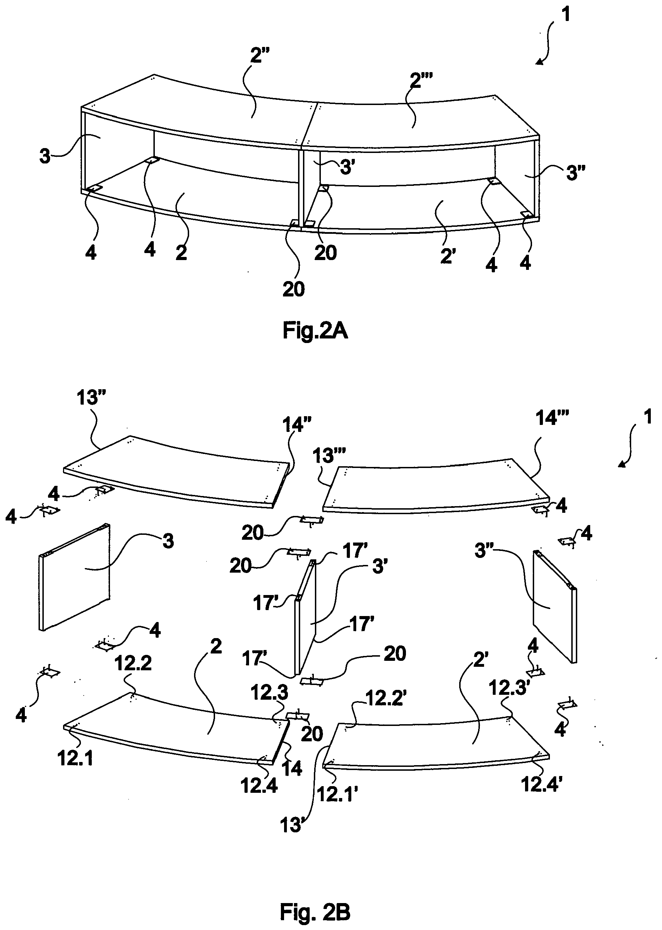

Fig. 2A shows an embodiment of a furniture system 1 according to the invention, where the furniture system 1 comprises four first boards and three second boards 3. Thus, the furniture system 1 is enlarged in relation to the furniture system 1 shown in Fig. 1A.

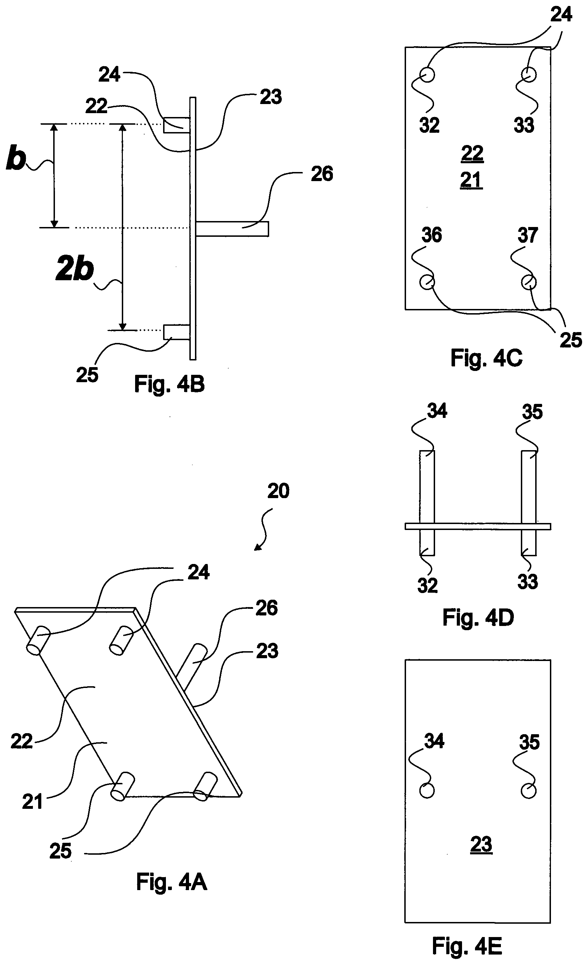

The furniture system 1 shown in Figs. 2A and 2B further comprises a T-bracket 20 (the T-bracket is described more thoroughly in Figs. 4A-E. Thus for clarity, reference is made to Figs. 4A-E in relation to the following numbering 21-26). The T-bracket 20 has a board-shaped basis part 21 with a first basis part face 22 and a second basis part face 23. A first projection 24 and a third projection 25 project from the first basis part face 22. A second projection 26 projects from the second basis part face 23. The second projection 26 is dimensioned for reception in the edge recess 17' of a second board 3. It is evident from Fig. 2A that the first boards 2 and 2' are placed in the same plane, where the second edge face 14 of the first board 2 abuts the first edge face 13 of the additional first board 2'. The face recesses 12.4 and 12.1' of the first boards 2, 2' are thus placed opposite each other at a distance corresponding to the distance ***2b*** between the first projection 24 of the T-bracket 20 and the third projection 25 of the T-bracket 20. Thus, the distance between the first projection 24 of the T-bracket 20 and the second projection 26 of the T-bracket 20 is ***b*** (this is described further in Figs. 4A-E). By assembly of the furniture system 1 (see Fig. 1A), the T-bracket 20 thus fixes the second board 3' perpendicular to the two first boards 2, 2' as the second projection 26 of the T-bracket is completely received in the edge recess 17' of the second board 3'. This function of the T-bracket 20 corresponds to the edge recesses 17 of the second boards 3, 3" being shaped so as to cooperate with the second projection 11 of the angle bracket 4. The second boards 3, 3', 3" are identical the edge recesses 17 on the second board 3 and the edge recesses 17' as shown in Fig. 1B are thus also identical and placed in the same way.

It is evident from Figs. 2A and 2B that the furniture system 1 is enlarged in the width compared to the furniture system shown in Figs. 1A and 1B. By the use of the T-bracket 20 it is achieved that the furniture system 1 is still a single-faced system. By single-faced is meant that the system only comprises boards, which have essentially four lateral faces, which means that boards are not arranged such that they have lateral faces against each other.

Figs. 3A-E show an angle bracket 4 with a board-shaped basis part 9 with a first basis part face 30 and a second basis part face 31. Two dowels 32, 33 constituting the first projection 10 of the angle bracket 4 project from the first basis part face 30. Two dowels 34, 35 constituting the second projection 11 of the angle bracket 4 also project from the second basis part face 31. In this embodiment, first projection 10 and second projection 11 are positioned at a distance from the edge of the basis part 9. Fig. 3B shows that the two projections 10, 11 are positioned at a distance ***a*** from each other. The distance ***a*** of the angle bracket 4 may e.g. be 1-50 mm, 10-40mm or 20-30 mm. The dowels 32, 33, 34, 35 may for instance have a diameter of 3-7 mm, preferably 4-6 mm.

In this embodiment, first and second projection 10, 11 do not have the same length. The second projection 11 may be approx. 25 mm and the first projection 10 approx. 10 mm. If the face recesses in the first boards are opposite each other, the first projection 10 has a maximum projection from the basis part face 30 of half the thickness of the first boards 2, 2', 2", 2"'. This way it is achieved that angle brackets 4 can be mounted in the face recesses 12 on both sides of a first board 2, 2', 2", 2'" (shown in a subsequent Fig.). It is shown that the dowels in second projection 11 and first projection 10 are positioned at the same distance from each other. This distance does not have to be the same.

Figs. 4A-E show a T-bracket 20 as shown in Fig. 2 for connecting two first boards 2 with a second board 3 (not shown). The T-bracket 20 comprises a board-shaped basis part 21 with a first basis part face 22 from where a first projection 24 and a third projection 25 project. A second projection 26 projects from the second basis part face 23 of the T-bracket 20. In this embodiment, the first, second and third projections (24, 26, 25) each comprise two dowels constituting the projections. As shown in Fig. 2, the first projection 24 and the third projection 25 are arranged so as to be received tightly in the face recesses 12 in first boards 2 where a first edge face 13 of a first board abuts an edge face 14 of an additional first board so that the lateral faces 5, 6 of the first boards are flush with each other.

The dowels 32, 33, 34, 35 may e.g. have a diameter of 3-7 mm, preferably 4-6 mm.

In this embodiment, first projection 24 and second projection 26 are positioned at a distance from the edge of the basis part 9. Fig. 4 shows that the first projection 24 and the second projection 26 are positioned at a distance ***b*** from each other. The distance ***b*** of the T-bracket 20 may e.g. 10-60 mm, 20-50 mm or 30-40 mm. The dowels 32, 33, 34, 35 may e.g. have a diameter of 3-7 mm, preferably 4-6 mm. The distance between the third projection 25 and the second projection 26 also corresponds to the distance ***b*,** and the distance between the first projection 24 and the third projection 25 is thus ***2b.*** It is shown that the distance between the two dowels, which constitute in this embodiment first and third projection, respectively, is the same. This is advantageous as a bracket thus does not need a specific orientation in order to be mounted in the face recesses. Likewise, it is shown that the distance between the dowels in second projection 26 equals the distance between the dowels in first and third projections, respectively. The distances do not have to equal each other.

It is evident from the Fig. that the first projection 24 and the third projection 25 project the same distance from the basis part 21. The second projection 26 projects further from the basis part 21 than the first and third projection 24, 25. It applies both to the angle bracket 4 and T-bracket 20 that their second projection is dimensioned for tight reception in edge recesses 17, 17' (see Fig. 2) in second boards 3, 3', 3". By application of a force perpendicular to a lateral face of a second board, which is mounted at one of the edge faces in a bracket fixed into position, the second board will counteract said force at the connection point between bracket and board. Thus it is desired that the second projection is longer (than first and third projection) so that it is the properties of the board which is decisive for the strength and not the contact between board and bracket.

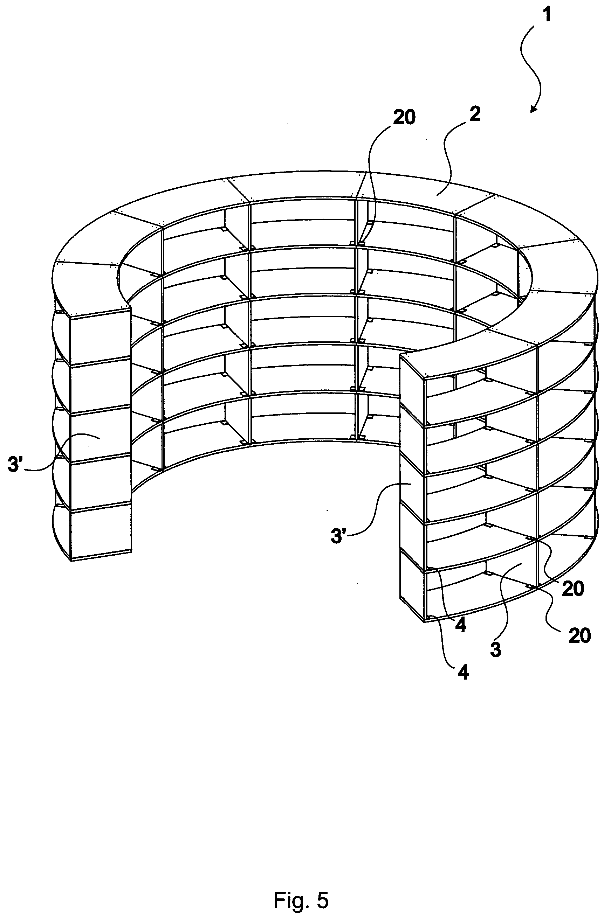

Fig. 5 shows a furniture system 1 according to the invention shown in perspective view, where the furniture system 1 is assembled as part of a circle. This is possible because the first boards 2 are arcuate. This assembly is thus a further assembly of the furniture system 1 shown in Figs. 2A and 2B. According to a further embodiment of the invention, the first boards 2 may be quadrangular, e.g. rectangular, and an assembly of a furniture system 1 with a number of boards and brackets corresponding to the system shown in Fig. 5 would thus be a quadrangular set of shelves. At the end walls of the furniture system, angle brackets 4 have been used to assemble two first boards 2 and second boards 3'. All other assemblies between first boards 2 and second boards 3 are assembled with T-brackets 20.

In order not to cause confusion, only a few of the boards and brackets, respectively, have been numbered. It is given that all first boards 2 are positioned horizontally and all second boards are positioned vertically. As the furniture system 1 shown in perspective view, it is not visible that all first boards 2, apart from the bottom ones, are supported by two brackets in each end.

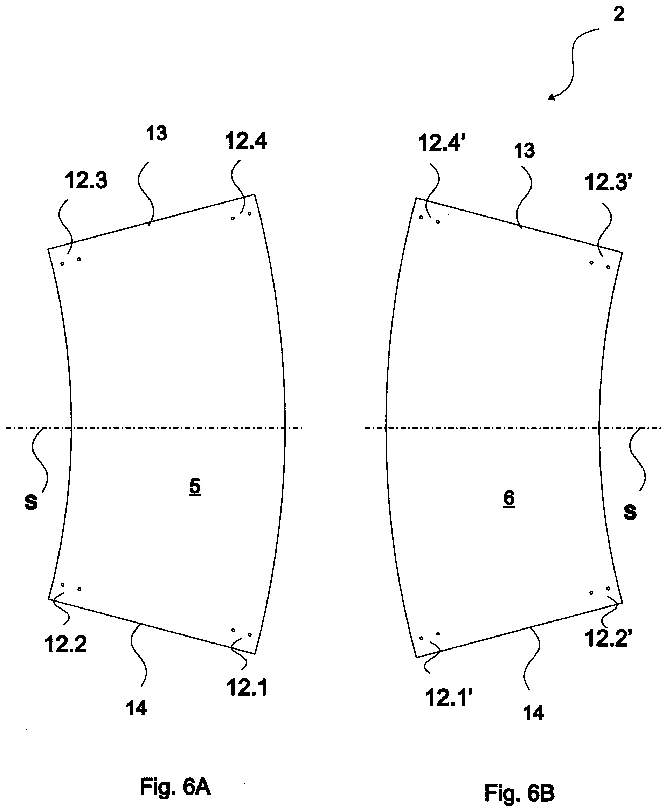

Fig. 6A shows the lateral face 5 of a first board 2 with face recesses 12.1-12.4.

Fig. 6B shows the second face 6 of a first board 2 with face recesses 12.1'-12.4'. It is evident that the face recesses in first board 2 are symmetrical about the line ***S.*** In order to be able to use a first board 2 regardless of whether the first lateral face 5 or the second face 6 is facing into the box-shaped room, said symmetry must be maintained. Thus, it is possible to move e.g. the recess 12.1 towards the middle of the edge face 14 if the face recess 12.3' is moved equally towards the middle of the edge face 13. Thereby, it is achieved that first board 2 can be turned upside down and still be used as opposite board. In the shown embodiment of first board 2, the board is arcuate. The first board may have other shapes. If the first board is rectangular, the recesses can be arranged so that the board can be turned in two ways and still fit together with the other components. This means that the board can be turned two ways with a first lateral face facing the inside of the box and two other ways with a second lateral face facing the inside of the box.

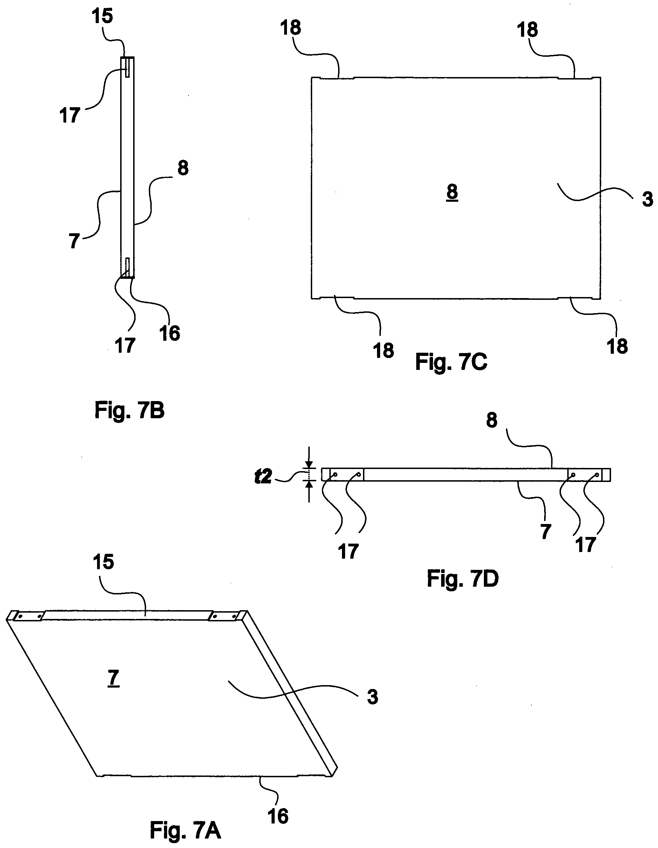

Fig. 7 shows second board 3 with a number of edge recesses 17. In this embodiment, the edge recesses 17 are in the shape of two separate holes dimensioned for reception of the second projection 11, 26 of the brackets. If the second projection of the brackets is changed to e.g. a board or three dowels, the edge recesses are to be changed accordingly. In the embodiment shown, second board 3 comprises additional recesses 18 (only shown with numbers in Fig. 7C). By assembly of a first board 2 with a second board 3 by means of a bracket 4, 20 with a board-shaped basis part 9, 21, second board 3 will not touch first board 2 as the bracket basis part will be positioned between the two boards 2, 3. By means of the additional recess 18, it is thus achieved that both the first and second boards have a long contact surface and thus a long support surface. Further, a nice aesthetic expression is obtained, in which the constructed box shape has essentially closed corners.

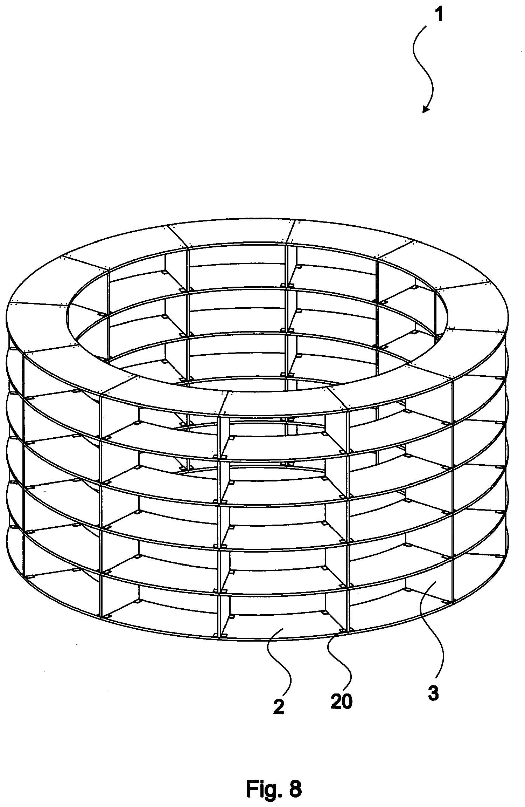

Fig. 8 shows a furniture system 1, where the furniture system forms a circumferential unit. According to the invention, this is achieved by the use of first boards 2 and second boards 3 and T-brackets. As obviously there are no end walls in such closed circumferential furniture system, no further brackets are required for assembly and enlargement of said system in layers.

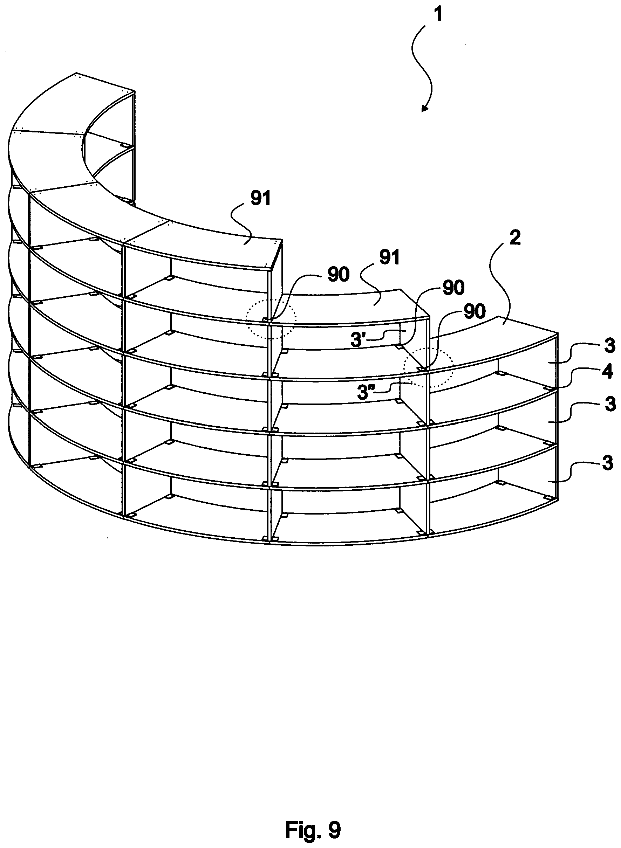

Fig. 9 shows a perspective view of a furniture system 1 partly in staircase shape. Like the furniture system 1 shown in Fig. 5, angle brackets 4 have been used for assembly of first boards 2 with second boards 3 and the end walls of the furniture system 1. In order to ensure strength and the aesthetic expression of the furniture system 1, a third bracket 90 has been used, which is essentially an angle bracket 4 with a little change for assembling the staircase shape of the furniture system. In order to achieve that the second board 3' is in a straight line above the second board 3", it is a requirement that the distance between the first projection and the second projection on the bracket 90 is offset half a board thickness of a second board. As shown in Fig. 1A, it is achieved by the angle bracket 4 when assembling the two boards that one of the lateral faces of the second board 3 is flush with the edge face of the first board. This way it is achieved that visually, the end wall of the furniture system appears essentially as a plane surface, where the second boards 3 are in a straight line above each other. In order to obtain the same straight line when assembling in steps, it is necessary with a modified first board 91, which is half a board thickness longer than a first board 2. It would be possible to use the angle bracket 4 and a first board 2, but in assemblies marked with dotted circles, second boards positioned above would thus be offset to second boards positioned below. Thus, the third bracket has a distance between the first projection and the second projection of ***b*** + 0.5***t***.

### Reference numbers

1 furniture system
2, 2',2",2"' first board
3, 3', 3" second board
4 angle bracket
5 first lateral face of first board
6 second lateral face of second board
7 first lateral face of second board
8 second lateral face of second board
9 board-shaped basis part
10 first projection on angle bracket
11 second projection on angle bracket
12 face recesses
13 edge face
14 second edge face of first board
15 first edge face of second board
16 second edge face of second board
17, 17' edge recess of second board
18 additional recess
20 T-bracket
21 T-bracket basis part
22 first face of T-bracket basis part
23 second face of T-bracket basis part
24 first projection of T-bracket
25 third projection of T-bracket
26 second projection of T-bracket
30 first basis part face
31 second basis part face
32 dowel first projection
33 dowel first projection
34 dowel second projection
35 dowel second projection
36 dowel third projection
37 dowel third projection

## Claims

1. Modularly assemblable furniture system (1) for assembling box-shaped furniture systems such as a set of shelves, comprising:
- a number of first boards (2, 2',2",2"') with a thickness and a first lateral face (5) and a second lateral face (6) and a first edge face (13) and a second edge face (14),
- a number of second boards (3, 3', 3") with a thickness **(*t2)*** and with a first lateral face (7) and a second lateral face (8) and a first edge face (15) and a second edge face (16), as well as
- a number of angle brackets (4) for a rectangular assembly of a first board (2, 2', 2",2"') with a second board (3, 3', 3"),
where the angle bracket (4) comprises:
- a board-shaped basis part (9) with a first basis part face (30) and a second basis part face (31),
- a first projection (10) comprising two dowels (32, 33) projecting from the first basis part face (30), and
- a second projection (11) comprising two dowels (32, 33) projecting from the second basis part face (31), said projections being positioned at a distance (***a)*** from each other,
- said second boards (3, 3', 3") being provided with, in relation to the thickness, centrally positioned edge recesses (17, 17') in a couple of opposing edge faces (15, 16), said edge recesses (17, 17') being dimensioned for reception of the second projections (11), and
- said first boards (2, 2', 2",2"') having in the first lateral face (5) first and second face recesses (12.1-12.4, 12.1'-12.4'), which are dimensioned for reception of the first projection (10) of the angle bracket, said face recesses (12.1-12.4, 12.1'-12.4') being positioned at a distance from the first and the second edge faces (13, 14), respectively, so that when the second projections (11) of the angle bracket are engaged with the edge recesses (17, 17') of a second board (3, 3', 3"), said edge face (13, 14) of the first board (2, 2', 2",2"') is flush with the lateral face (7, 8) of the second board (3,3',3") so that an end wall of said furniture system appears essentially as a plane surface, wherein the face recesses (12.1-12.4, 12.1'-12.4'12) on the first and second lateral face (5, 6), respectively, of the first boards (2, 2', 2",2"') are positioned two by two opposite each other perpendicular on the lateral face (5, 6) when seen in a sectional view, and in that the modularly assemblable furniture system is for assembling box-shaped furniture systems without use of other fixtures, such as nails or screws, to hold the system together.

2. Modularly assemblable furniture system (1) according to claim 1 or 2, wherein the face recesses (12.1-12.4, 12.1'-12.4') of the first boards (2, 2', 2", 2"') are positioned at the same distance from each their closest edge face (13, 14).

3. Modularly assemblable furniture system (1) according to claims 1-3, wherein the first and/or second boards (2, 2', 2", 2"', 3, 3', 3") are rectangular.

4. Modularly assemblable furniture system (1) according to claims 1-4, wherein the first board (2, 2', 2", 2"') and the second board (3, 3', 3") are identical.

5. Modularly assemblable furniture system (1) according to claims 1-4, wherein the first boards (2, 2', 2",2"') are arcuate.

6. Modularly assemblable furniture system (1) according to claims 1-6, wherein the face recesses (12.1-12.4, 12.1'-12.4') in the first boards (2, 2', 2", 2"') are through-going holes from the first lateral face (5) to the second lateral face (6).

7. Modularly assemblable furniture system (1) according to claims 1-6, wherein the face recesses (12.1-12.4, 12.1'-12.4') are blind holes.

8. Modularly assemblable furniture system (1) according to claims 1-8, wherein the edge recesses (17, 17') are blind holes.

9. Modularly assemblable furniture system (1) according to claims 1-9 further comprising a T-bracket (20) for connection three boards, wherein the T-bracket (20) comprises:
- a board-shaped basis part (21) with a first basis part face (22) and a second basis part face (23),
- a first projection (24) projecting from the first face (22), said first projection (24) dimensioned for reception in a face recess (12.1-12.4, 12.1'-12.4') of a first board (2, 2', 2",2"'),
- a second projection (26) projecting from the second face (23), said second projection (26) dimensioned for reception in an edge recess (17, 17') of a second board (3, 3', 3"), and
- a third projection (25) projecting from the first face (22), said third projection (25) dimensioned for reception in a face recess (12.1-12.4, 12.1'-12.4') of a flushing abutting additional first board (2, 2', 2",2"'), and where the first and the third projection (24, 25) are positioned at the same distance (***b)*** from the second projection (26) corresponding to the distance (***a)*** of the angle bracket (4) (between the first projection (10) and the second projection (11) to which half a board thickness (***t2)*** of the second board (3, 3', 3") is added.

10. Modularly assemblable furniture system (1) according to claim 10, wherein the furniture system (1) further comprises:
- a third bracket (90) comprising:
- a board-shaped basis part with a first basis part face and a second basis part face,
- a first projection projecting from the first face, said first projection dimensioned for reception in a face recess (12.1-12.4, 12.1'-12.4') of a first board (2, 2', 2",2"'), and
- a second projection projecting from the second face, said second projection dimensioned for reception in an edge recess (17, 17') of a second board (3, 3', 3"), said projections positioned at a distance from each other corresponding to the distance (***b)*** between the first projection (24) and the second projection (26) of the T-bracket (20), and
- a number of third boards (91) with t thickness and a first lateral face and a second lateral face and a first edge face and a second edge face, wherein the distance of the third board between the first edge face and the second edge face is increased in relation to the distance of a first board (2, 2', 2",2"') between its first edge face (13, 13') and a second edge face (14, 14'), where the increase corresponds to the half of the thickness (***t2)*** of a second board (3, 3', 3").

11. Modularly assemblable furniture system (1) according to claims 1-11, wherein the first and/or the second projection (10, 11, 24, 26) is positioned at a distance from the edge of the basis part (9).

12. Modularly assemblable furniture system (1) according to claims 1-12, wherein each of the projections (10, 11, 24, 25, 26) are composed by one or more cylindrical dowels (32, 33, 34, 35, 36, 37).

13. Modularly assemblable furniture system (1) according to claim 10 for assembling box-shaped furniture systems, such as a set of shelves, comprising:
- a number of T-brackets (20) for rectangular assembly two first boards (2, 2', 2",2'") with a second board (3, 3', 3"), said T-brackets (20) each connects three boards, wherein
- said second board (3, 3', 3") being provided with, in relation to the thickness, a centrally positioned edge recess (17, 17') in a pair of opposing edge faces (15, 16), said edge recess (17, 17') being dimensioned for reception of the second projection (26) of the T-bracket (20), and
- said first boards (2, 2', 2",2"') having in the first lateral face (5) a first and a second face recesses (12.1-12.4, 12.1'-12.4'), which are dimensioned for reception of the first and the third projections (24, 25) of a T-bracket, said face recesses (12.1-12.4, 12.1'-12.4') being positioned at a distance from the first and the second edge face (13, 14), respectively, so that when the second projection (26) of the T-bracket is engaged with the edge recess (17, 17') of a second board (3, 3', 3"), and the first and third projections (24, 25) of the T-bracket (20) are received in the face recesses (12.1-12.4, 12.1'-12.4'), the first lateral faces (5) of the two first boards (2, 2', 2",2"') are flush with each other.

## Patentansprüche

1. Modular zusammensetzbares Möbelsystem (1) zur Montage von kastenförmigen Möbelsystemen, wie ein Set von Regalen, umfassend:
- eine Anzahl von ersten Brettern (2, 2', 2", 2"') mit einer Dicke und einer ersten Seitenfläche (5) und einer zweiten Seitenfläche (6) und einer ersten Randfläche (13) und einer zweiten Randfläche (14),
- eine Anzahl von zweiten Brettern (3, 3', 3") mit einer Dicke (t2) und mit einer ersten Seitenfläche (7) und einer zweiten Seitenfläche (8) und einer ersten Randfläche (15) und einer zweiten Randfläche (16),
sowie
- eine Anzahl von Befestigungswinkeln (4) für eine rechteckige Anordnung eines ersten Bretts (2, 2', 2", 2'") mit einem zweiten Brett (3, 3', 3"),
wobei der Befestigungswinkel (4) umfasst:
- ein brettförmiges Basisteil (9) mit einer ersten Basisteilfläche (30) und einer zweiten Basisteilfläche (31),
- einen ersten Vorsprung (10) mit zwei Dübeln (32, 33) aus der ersten Basisteilfläche (30) herausragend, und
- einen zweiten Vorsprung (11) mit zwei Dübel (32, 33) aus der zweiten Basisteilfläche (31) herausragend, wobei die Vorsprünge in einem Abstand (***a***) voneinander angeordnet sind,
- wobei jene zweiten Bretter (3, 3', 3") in Bezug auf die Dicke mit zentral positionierten Randausnehmungen (17, 17') in mehreren gegenüberliegenden Randflächen (15, 16) versehen sind, wobei jene Randausnehmungen (17, 17') zur Aufnahme der zweiten Vorsprünge (11) bemessen sind,
und
- wobei jene ersten Bretter (2, 2', 2", 2"') in der ersten Seitenfläche (5) eine erste und eine zweite Flächenausnehmung (12.1-12.4, 12.1'-12.4') aufweisen, die für die Aufnahme des ersten Vorsprungs (10) des Befestigungswinkels dimensioniert sind, wobei jene Flächenausnehmungen (12.1-12.4, 12.1'- 12.4') in einem Abstand von der ersten bzw. der zweiten Randfläche (13, 14) positioniert sind, so dass, wenn die zweiten Vorsprünge (11) der Befestigungswinkel mit den Randausnehmungen (17, 17') eines zweiten Bretts (3, 3', 3") verbunden sind, wobei jene Randfläche (13, 14) des ersten Bretts (2, 2', 2", 2"') zu der Seitenfläche (7, 8) des zweiten Bretts (3,3', 3") bündig ist, so dass eine Endwand jenes Möbelsystems im Wesentlichen als ebene Fläche erscheint,
wobei
die Seitenausnehmungen (12.1-12.4, 12.1'-12.4'12) an der ersten bzw. der zweiten Seitenfläche (5, 6) der ersten Bretter (2, 2', 2", 2"') jeweils zwei und zwei gegenüberliegend angeordnet sind, senkrecht zur Seitenfläche (5, 6) wenn in einem Schnittbild betrachtet, und in dem das modular zusammensetzbare Möbelsystem zur Montage von kastenförmigen Möbelsystemen ohne Verwendung anderer Befestigungen wie Nägel oder Schrauben, um das System zusammenzuhalten, ist.

2. Modular zusammensetzbares Möbelsystem (1) nach Anspruch 1, wobei die Flächenausnehmungen (12.1-12.4, 12.1'-12.4') der ersten Bretter (2, 2', 2", 2"') im gleichen Abstand von jeder ihrer nächstgelegenen Randfläche (13, 14) positioniert sind.

3. Modular zusammensetzbares Möbelsystem (1) nach den Ansprüchen 1 bis 2, wobei das erste und/ oder zweite Brett (2, 2', 2", 2"', 3, 3', 3") rechteckig sind.

4. Modular zusammensetzbares Möbelsystem (1) nach den Ansprüchen 1 bis 3, wobei das erste Brett (2, 2', 2", 2"') und das zweite Brett (3, 3', 3") identisch sind.

5. Modular zusammensetzbares Möbelsystem (1) nach den Ansprüchen 1-3, wobei die ersten Bretter (2, 2', 2", 2"') bogenförmig sind.

6. Modular zusammensetzbares Möbelsystem (1) nach den Ansprüchen 1 bis 5, wobei die Flächenausnehmungen (12.1-12.4, 12.1'-12.4') in den ersten Brettern (2, 2', 2", 2"') durchgängige Löcher von der ersten Seitenfläche (5) zur zweiten Seitenfläche (6) sind.

7. Modular zusammensetzbares Möbelsystem (1) nach den Ansprüchen 1 bis 5, wobei die Flächenausnehmungen (12.1-12.4, 12.1'- 12.4') blinde Löcher sind.

8. Modular zusammensetzbares Möbelsystem (1) nach den Ansprüchen 1 bis 7, wobei die Randausnehmungen (17, 17') blinde Löcher sind.

9. Modular zusammensetzbares Möbelsystem (1) nach den Ansprüchen 1 bis 8, ferner umfassend eine T-Halterung (20) zum Verbinden von drei Brettern, wobei die T-Halterung (20) umfasst:
- ein bretterförmiges Basisteil (21) mit einer ersten Basisteilfläche (22) und einer zweiten Basisteilfläche (23),
- einen ersten Vorsprung (24), der von der ersten Fläche (22) vorsteht, wobei jener erste Vorsprung (24) dimensioniert ist für die Aufnahme in einer Flächenausnehmung (12.1-12.4, 12.1'-12.4') eines ersten Bretts (2, 2', 2", 2"'),
- einen zweiten Vorsprung (26), der von der zweiten Fläche (23) vorsteht, wobei jener zweite Vorsprung (26) dimensioniert ist für die Aufnahme in einer Randausnehmung (17, 17') eines zweiten Bretts (3, 3', 3"),
und
- einen dritten Vorsprung (25), der von der ersten Fläche (22) vorsteht, wobei jener dritte Vorsprung (25) dimensioniert ist für die Aufnahme in eine Flächenausnehmung (12.1-12.4, 12.1'-12.4') eines bündig anschlagenden zusätzlichen ersten Bretts (2, 2', 2", 2"'), und wobei der erste und der dritte Vorsprung (24, 25) im gleichen Abstand (***b***) vom zweiten Vorsprung (26) angeordnet sind, entsprechend des Abstands (***a***) des Befestigungswinkels (4) (zwischen dem ersten Vorsprung (10) und dem zweiten Vorsprung (11), zu dem eine halbe Brettdicke (***t2***) des zweiten Bretts (3, 3', 3") hinzugefügt ist.

10. Modular zusammensetzbares Möbelsystem (1) nach Anspruch 9, wobei das Möbelsystem (1) ferner umfasst:
- eine dritte Halterung (90), umfassend:
- ein bretterförmiges Basisteil mit einer ersten Basisteilfläche und einer zweiten Basisteilfläche,
- einen ersten Vorsprung, der von der ersten Fläche vorsteht, wobei jener erste Vorsprung dimensioniert ist für die Aufnahme in einer Flächenausnehmung (12.1-12.4, 12.1'-12.4') eines ersten Bretts (2, 2', 2", 2"') und
- einen zweiten Vorsprung, der von der zweiten Fläche vorsteht, wobei jener zweite Vorsprung dimensioniert ist für die Aufnahme in einer Randausnehmung (17, 17') eines zweiten Bretts (3, 3', 3"), wobei jene Vorsprünge in einem Abstand voneinander angeordnet sind entsprechend des Abstands (***b***) zwischen dem ersten Vorsprung (24) und dem zweiten Vorsprung (26) der T-Halterung (20) und
- eine Anzahl dritter Bretter (91) mit einer Dicke t und einer ersten Seitenfläche und einer zweiten Seitenfläche und einer ersten Randfläche und einer zweiten Randfläche, wobei der Abstand des dritten Bretts zwischen der ersten Randfläche und der zweiten Randfläche in Relation zu dem Abstand eines ersten Bretts (2, 2', 2", 2"') zwischen seiner ersten Randfläche (13, 13') und einer zweiten Randfläche (14, 14') erhöht ist, wobei die Zunahme der Hälfte der Dicke (***t2***) eines zweiten Bretts (3, 3', 3") entspricht.

11. Modular zusammensetzbares Möbelsystem (1) nach den Ansprüchen 1 bis 10, wobei der erste und/ oder der zweite Vorsprung (10, 11, 24, 26) in einem Abstand vom Rand des ersten Basisteils (9) positioniert ist.

12. Modular zusammensetzbares Möbelsystem (1) nach den Ansprüchen 1 bis 11, wobei jeder der Vorsprünge (10, 11, 24, 25, 26) aus einem oder mehreren zylindrischen Dübeln (32, 33, 34, 35, 36, 37) besteht.

13. Modular zusammensetzbares Möbelsystem (1) nach Anspruch 9 zur Montage kastenförmiger Möbelsysteme, beispielsweise ein Set aus Regalen, bestehend aus:
- eine Anzahl von T-Halterungen (20) für die rechteckige Anordnung von zwei ersten Brettern (2, 2', 2", 2"') mit einem zweiten Brett (3, 3', 3"), wobei die T-Halterungen (20) jeweils drei Bretter verbinden, wobei
- jenes zweite Brett (3, 3', 3") in Bezug auf die Dicke eine zentral positionierte Randausnehmung (17, 17') in einem Paar gegenüberliegender Randflächen (15, 16) aufweist, wobei jene Randausnehmung (17, 17') dimensioniert ist für die Aufnahme des zweiten Vorsprungs (26) der T-Halterung (20), und
- jene ersten Bretter (2,2', 2", 2"'), die in der ersten Seitenfläche (5) eine erste und eine zweite Flächenausnehmung (12.1-12.4, 12.1'-12.4') ausweisen, die für die Aufnahme der ersten und der dritten Vorsprünge (24, 25) eines T-Halterung dimensioniert sind, wobei jene Flächenausnehmungen (12.1-12.4,12.1'-12.4') in einem Abstand von der ersten bzw. der zweiten Randfläche (13, 14) positioniert sind, so dass, wenn der zweite Vorsprung (26) der T-Halterung mit der Randausnehmung (17, 17') eines zweiten Bretts (3, 3', 3") verbunden ist, und der erste und dritte Vorsprung (24, 25) der T-Halterung (20) in den Flächenausnehmungen (12.1-12.4, 12.1'-12.4') aufgenommen sind, die ersten Seitenflächen (5) der beiden ersten Bretter (2, 2', 2", 2"') bündig zueinander sind.

## Revendications

1. Système de mobilier à assemblage modulaire (1) pour assembler des systèmes de mobilier en forme de boîte tels qu'un ensemble d'étagères, comprenant :
- un nombre de premières planches (2, 2', 2", 2'") ayant une épaisseur et une première face latérale (5) et une seconde face latérale (6) et une première face de bord (13) et une seconde face de bord (14),
- un nombre de deuxièmes planches (3, 3', 3") ayant une épaisseur (t2) et ayant une première face latérale (7) et une seconde face latérale (8) et une première face de bord (15) et une seconde face de bord (16), ainsi que
- un nombre d'équerres de fixation (4) pour un ensemble rectangulaire constitué d'une première planche (2, 2', 2", 2"') avec une deuxième planche (3, 3', 3"),
dans lequel l'équerre de fixation (4) comprend :
- une partie de base en forme de planche (9) ayant une première face de partie de base (30) et une seconde face de partie de base (31),
- une première saillie (10) comprenant deux chevilles (32, 33) faisant saillie depuis la première face de partie de base (30), et
- une seconde saillie (11) comprenant deux chevilles (32, 33) faisant saillie depuis la seconde face de partie de base (31), lesdites saillies étant positionnées à une distance (a) l'une de l'autre,
- lesdites deuxièmes planches (3, 3', 3") étant munies, par rapport à l'épaisseur, de cavités de bord (17, 17') positionnées centralement dans un couple de faces de bord opposées (15, 16), lesdites cavités de bord (17, 17') étant dimensionnées pour recevoir les secondes saillies (11), et
- lesdites premières planches (2, 2', 2", 2"') ayant dans la première face latérale (5) des première et secondes cavités de face (12.1-12.4, 12.1'-12.4'), qui sont dimensionnées pour recevoir la première saillie (10) de l'équerre de fixation, lesdites cavités de face (12.1-12.4, 12.1'-12.4') étant positionnées à une distance par rapport aux première et seconde faces de bord (13, 14), respectivement, de sorte que, lorsque les secondes saillies (11) de l'équerre de fixation sont en prise avec les cavités de bord (17, 17') d'une deuxième planche (3, 3', 3"), ladite face de bord (13, 14) de la première planche (2, 2', 2", 2"') affleure la face latérale (7, 8) de la deuxième planche (3,3',3") de sorte qu'une paroi d'extrémité dudit système de mobilier apparaît essentiellement sous la forme d'une surface plane,
dans lequel les cavités de face (12.1-12.4, 12.1'-12.4'12) sur les première et seconde faces latérales (5, 6), respectivement, des premières planches (2, 2', 2", 2"') sont positionnées deux par deux à l'opposé l'une de l'autre perpendiculairement sur la face latérale (5, 6), lorsqu'observé sur une vue en coupe, et en ce que le système de mobilier à assemblage modulaire est destiné à assembler des systèmes de mobilier en forme de boîte sans utiliser d'autres fixations, telles que des clous ou des vis, pour maintenir ensemble le système.

2. Système de mobilier à assemblage modulaire (1) selon la revendication 1 ou 2, dans lequel les cavités de face (12.1-12.4, 12.1'-12.4') des premières planches (2, 2', 2", 2"') sont positionnées à la même distance par rapport à chacune de leur face de bord la plus proche (13, 14).

3. Système de mobilier à assemblage modulaire (1) selon les revendications 1 à 3, dans lequel les première et/ou deuxième planches (2, 2', 2", 2"', 3, 3', 3") sont rectangulaires.

4. Système de mobilier à assemblage modulaire (1) selon les revendications 1 à 4, dans lequel la première planche (2, 2', 2", 2'") et la deuxième planche (3, 3', 3") sont identiques.

5. Système de mobilier à assemblage modulaire (1) selon les revendications 1 à 4, dans lequel les premières planches (2, 2', 2", 2"') sont arquées.

6. Système de mobilier à assemblage modulaire (1) selon les revendications 1 à 6, dans lequel les cavités de face (12,1-12,4, 12,1'-12,4') dans les premières planches (2, 2', 2", 2"') sont des trous traversants allant de la première face latérale (5) à la seconde face latérale (6).

7. Système de mobilier à assemblage modulaire (1) selon les revendications 1 à 6, dans lequel les cavités de face (12,1-12,4, 12,1'-12,4') sont des trous borgnes.

8. Système de mobilier à assemblage modulaire (1) selon les revendications 1 à 8, dans lequel les cavités de bord (17, 17') sont des trous borgnes.

9. Système de mobilier à assemblage modulaire (1) selon les revendications 1 à 9, comprenant en outre une équerre en T (20) pour connecter trois planches, dans lequel l'équerre en T (20) comprend :
- une partie de base en forme de planche (21) ayant une première face de partie de base (22) et une seconde face de partie de base (23),
- une première saillie (24) faisant saillie depuis la première face (22), ladite première saillie (24) étant dimensionnée pour être reçue dans une cavité de face (12.1-12.4, 12.1'-12.4') d'une première planche (2, 2', 2", 2"'),
- une deuxième saillie (26) faisant saillie depuis la seconde face (23), ladite deuxième saillie (26) étant dimensionnée pour être reçue dans une cavité de bord (17, 17') d'une deuxième planche (3, 3', 3"), et
- une troisième saillie (25) faisant saillie depuis la première face (22), ladite troisième saillie (25) étant dimensionnée pour être reçue dans une cavité de face (12.1-12.4, 12.1'-12.4') d'une première planche supplémentaire (2, 2', 2", 2'") en butée de manière affleurante, et dans lequel les première et troisième saillies (24, 25) sont positionnées à la même distance (*b*) de la deuxième saillie (26) correspondant à la distance (*a*) par rapport à l'équerre de fixation (4) (entre la première saillie (10) et la deuxième saillie (11)) à laquelle une demi-épaisseur de planche *(t2)* de la deuxième planche (3, 3', 3") est ajoutée.

10. Système de mobilier à assemblage modulaire (1) selon la revendication 10, dans lequel le système de mobilier (1) comprend en outre :
- une troisième équerre (90) comprenant :
- une partie de base en forme de planche ayant une première face de partie de base et une seconde face de partie de base,
- une première saillie faisant saillie depuis la première face, ladite première saillie étant dimensionnée pour être reçue dans une cavité de face (12.1-12.4, 12.1'-12.4') d'une première planche (2, 2', 2", 2"'), et
- une deuxième saillie faisant saillie depuis la seconde face, ladite deuxième saillie étant dimensionnée pour être reçue dans une cavité de bord (17, 17') d'une deuxième planche (3, 3', 3"), lesdites saillies étant positionnées à distance l'une de l'autre correspondant à la distance (*b*) entre la première saillie (24) et la deuxième saillie (26) de l'équerre en T (20), et
- un nombre de troisièmes planches (91) ayant une épaisseur t et une première face latérale et une seconde face latérale et une première face de bord et une seconde face de bord, la distance de la troisième planche entre la première face de bord et la seconde face de bord étant augmentée par rapport à la distance d'une première planche (2, 2', 2", 2"') entre sa première face de bord (13, 13') et une seconde face de bord (14, 14'), dans lequel l'augmentation correspond à la moitié de l'épaisseur (*t2*) d'une deuxième planche (3, 3', 3").

11. Système de mobilier à assemblage modulaire (1) selon les revendications 1 à 11, dans lequel la première et/ou la deuxième saillie (10, 11, 24, 26) est positionnée à une distance du bord de la partie de base (9).

12. Système de mobilier à assemblage modulaire (1) selon les revendications 1 à 12, dans lequel chacune des saillies (10, 11, 24, 25, 26) est composée d'une ou plusieurs chevilles cylindriques (32, 33, 34, 35, 36, 37).

13. Système de mobilier à assemblage modulaire (1) selon la revendication 10 pour assembler des systèmes de mobilier en forme de boîte, tels qu'un ensemble d'étagères, comprenant :
- un nombre d'équerres en T (20) pour un ensemble rectangulaire constitué de deux premières planches (2, 2', 2", 2"') avec une deuxième planche (3, 3', 3"), lesdites équerres en T (20) reliant chacune trois planches, dans lequel
- ladite deuxième planche (3, 3', 3") étant munie, en référence à l'épaisseur, d'une cavité de bord positionnée centralement (17, 17') dans une paire de faces de bord opposées (15, 16), ladite cavité de bord (17, 17') étant dimensionnée pour recevoir la deuxième saillie (26) de l'équerre en T (20), et
- lesdites premières planches (2, 2', 2", 2'") ayant dans la première face latérale (5) une première et une seconde cavité de face (12.1-12.4, 12.1'-12.4'), qui sont dimensionnées pour recevoir des première et troisième saillies (24, 25) d'une équerre en T, lesdites cavités de face (12.1-12.4, 12.1'-12.4') étant positionnées à une distance des première et seconde faces de bord (13, 14), respectivement, de sorte que lorsque la deuxième saillie (26) de l'équerre en T est en prise avec la cavité de bord (17, 17') d'une deuxième planche (3, 3', 3"), et les première et troisième saillies (24, 25) de l'équerre en T (20) sont reçues dans les cavités de face (12.1-12.4, 12.1'-12.4'), les premières faces latérales (5) des deux premières planches (2, 2', 2", 2"') sont affleurantes l'une à l'autre.
